# EUROPÄISCHE PATENTSCHRIFT

(11) **EP 0 973 247 B1**
(45) Veröffentlichungstag und Bekanntmachung des Hinweises auf die Patenterteilung: **12.09.2007**
(21) Anmeldenummer: 99112480.1
(22) Anmeldetag: 01.07.1999
(51) Int. Cl.: H02M 5/45, H02M 1/12, B60L 9/00, H02J 3/38

(54) **Leistungsabhängige Pulsmusterverschiebung**
Pulse pattern translation dependant on the power
Translation des motifs d'impulsions en fonction de la puissance

(30) Priorität: 09.07.1998 DE 19830655
(43) Veröffentlichungstag der Anmeldung: 19.01.2000
(73) Patentinhaber: Bombardier Transportation GmbH, 13627 Berlin (DE)
(72) Erfinder: Biri, Herbert, 8052 Zürich (CH); Skarpetowski, Grezegorz, 5417 Untersiggenthal (CH); Stiegeler, Roland, 79725 Laufenburg (DE)
(74) Vertreter: Thielmann, Andreas

(56) Entgegenhaltungen:
- DE-A- 4 037 531
- DE-A- 19 701 191
- FR-A- 2 717 014
- US-A- 4 190 882
- SAKUTARO NONAKA ET AL: "SINGLE-PHASE COMPOSITE PWM VOLTAGE SOURCE CONVERTER" CONFERENCE RECORD OF THE INDUSTRY APPLICATIONS CONFERENCE IAS ANNUAL MEETING,US,NEW YORK, IEEE, Bd. CONF. 29, Seite 761-768 XP000512462 ISBN: 0-7803-1994-X

## Beschreibung

### TECHNISCHES GEBIET

Die Erfindung betrifft ein Verfahren zur Steuerung von Stromrichtern, insbesondere von Vierquadrantenstellern, welche Stromrichter steuerbare Ventile aufweisen, welche mittels eines auf die Netzspannung synchronisierten Trägersignals getaktet werden. Derartige Stromrichter werden unter anderem in Triebfahrzeugen eingesetzt.

### STAND DER TECHNIK

Die Taktung von Netzstromrichtern verursacht aufgrund der auftretenden Oberschwingungen unerwünschte Netzrückwirkungen, wie beispielsweise zusätzliche Nulldurchgänge der Versorgungsspannung auf der Zugsammelschiene. Diese Verzerrungen der Netzspannung können der Auslöser für Störungen in anderen Systemen sein, die ebenfalls von der Netzspannung gespeist werden. Probleme ergeben sich insbesondere dann, wenn in einem Verbund eine Vielzahl von Stromrichtern vorgesehen ist.

Zur Verringerung der Netzrückwirkungen wird beispielsweise in der DE 40 37 531 A1 ein Verfahren beschrieben, welches die Entstehung von Oberschwingungen reduzieren soll. Dazu ist eine phasenversetzte Taktung der verschiedenen Stromrichter im Verbund vorgesehen. Es wird ein fester Versatz des Trägersignals zur Netzspannungsgrundschwingung berechnet und zusätzlich für jeden Stromrichter ein konstanter Offset derart bestimmt, dass die Taktung der jeweiligen Stromrichter in regelmässigen zeitlichen Abständen erfolgt. Der Versatz ist dabei abhängig von der Anzahl der vorhandenen Stromrichter und deren Anordnung im Verbund; somit also zeitlich konstant. Die durch die Taktung entstehenden Oberschwingungen werden auf diese Weise zwar reduziert, jedoch ergeben sich weiterhin Netzrückwirkungen, welche negative Auswirkungen auf andere Systeme nach sich ziehen.

### DARSTELLUNG DER ERFINDUNG

Aufgabe der Erfindung ist es daher, ein Verfahren zur Steuerung von Stromrichtern anzugeben, welches die Rückwirkungen auf die Netzspannung weiter vermindert.

Diese Aufgabe wird erfindungsgemäss durch die Merkmale des Anspruchs 1 gelöst. Weitere Vorteile und Ausgestaltungen der vorliegenden Erfindung ergeben sich aus den Unteransprüchen zusammen mit der Beschreibung. Der Phasenwinkel des Trägersignals ist dabei zu dem Phasenwinkel der Netzspannungsgrundschwingung um einen Winkel ϕ verschoben und der Versatz ϕ des Phasenwinkels wird abhängig von den zeitlich veränderbaren Momentanwerten ausgewählter Kenngrössen bestimmt und ist daher zeitlich variabel.

Derartige Kenngrössen können beispielsweise die Netzspannung oder auch der netzseitige Strom sein. Es ist auch denkbar, die Verschiebung des Phasenwinkels des Trägersignals von der momentanen Netzleistung abhängig zu machen. Ferner können externe Signale, wie beispielsweise Funksignale, netzseitig auftretende Überspannungen oder dgl. zur Bestimmung des Versatzes verwendet werden.

Aufgrund der Abhängigkeit des Phasenwinkels des Trägersignals von den zeitlich veränderlichen Momentanwerten der Kenngrössen ergibt sich in der Summe eine weitgehende Auslöschung der Oberschwingungen. Die Netzrückwirkungen sind demgemäss erheblich reduziert. Insbesondere treten keine zusätzlichen Nulldurchgänge der Netzspannung mehr auf.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: eine Übersicht der Antriebseinheit eines Triebfahrzeugs, welche mit einem erfindungsgemässen Verfahren gesteuert wird,
- Fig. 2: ein Schaltbild eines erfindungsgemäss gesteuerten Netzstromrichters mit drei Netzkreisen, und
- Fig. 3: ein Blockschaltbild, welches eine Ausführungsform des erfindungsgemässen Verfahrens veranschaulicht.

### WEGE ZUR AUSFÜHRUNG DER ERFINDUNG

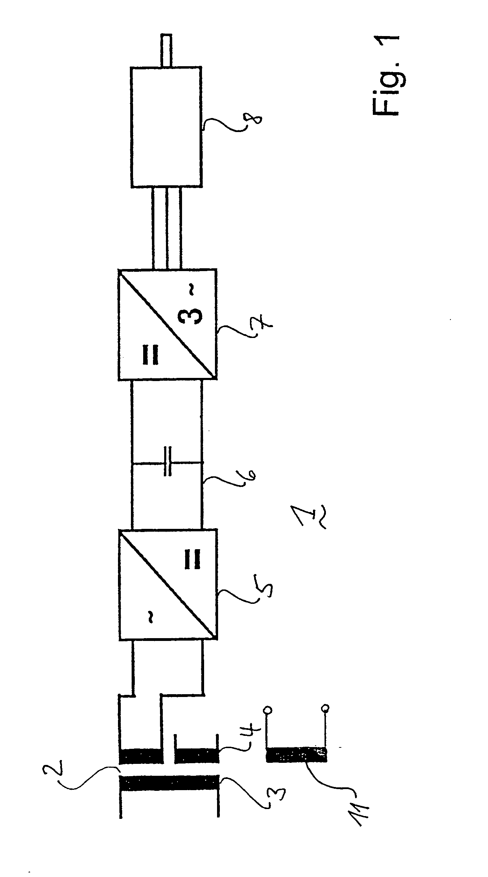

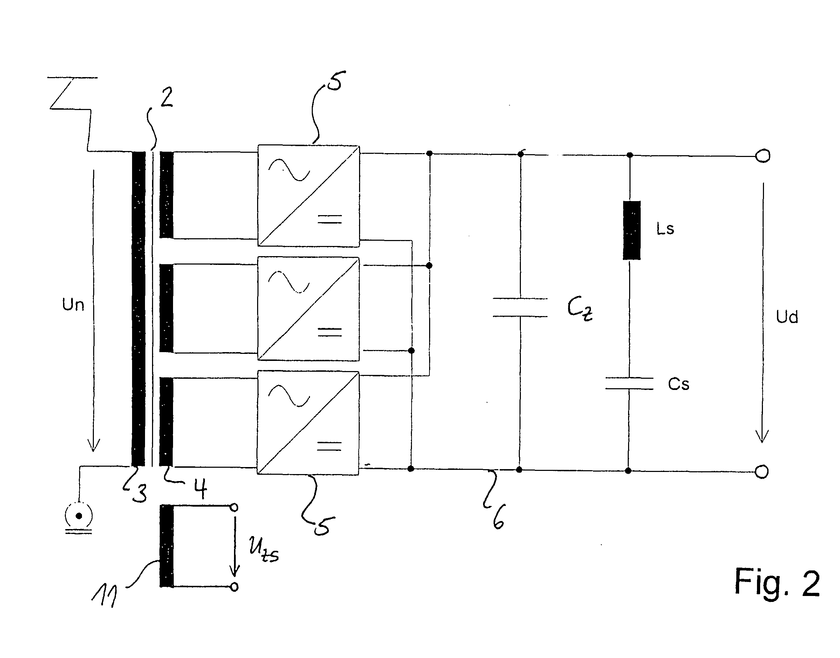

In Fig. 1 ist eine Antriebseinheit 1 dargestellt, wie sie beispielsweise in Lokomotiven als Achsantrieb eingesetzt wird. Die Antriebseinheit 1 weist einen Transformator 2 mit einer Primärwicklung 3 sowie einer oder mehreren Traktionswicklungen 4 auf, einen von dem Transformator 2 gespeisten Gleichrichter bzw. Vierquadrantensteller 5, welcher seinerseits einen Gleichspannungszwischenkreis 6 speist, sowie einen Antriebswechselrichter 7, welcher an seinem Ausgang einen Asynchronmotor 8 antreibt. Weiterhin ist eine Zugsammelschienenwicklung 11 dargestellt, welche die Zugsammelschiene zu den Wagen mit einer Zugsammelschienenspannung U_{zs} (Fig. 2) speist. Der Übersichtlichkeit halber ist nur ein Vierquadrantensteller 5 abgebildet; im allgemeinen sind jedoch mehrere Vierquadrantensteller 5, welche auch als Netzstromrichter bezeichnet werden, sowie ein bzw. zwei Antriebswechselrichter 7 pro Antriebseinheit 1 vorgesehen. Eine Lokomotive weist im allgemeinen mehrere Antriebseinheiten 1 auf und kann mit weiteren Lokomotiven zu einem Zugverbund zusammengeschlossen werden. Die gemeinsame Spannungsversorgung der vorhandenen Verbraucher wie z.B. Klimaanlagen in den Reisewagen erfolgt über eine Zugsammelschiene.

Die Anordnung einer Antriebseinheit 1 mit drei Vierquadrantenstellern 5 wird in Fig. 2 veranschaulicht. Es bezeichnet hierbei Uₙ die primärseitige Spannung des Transformators 2, C_{Z} einen Zwischenkreiskondensator sowie L_{S} und C_{S} eine Saugkreisdrossel bzw. einen Saugkreiskondensator zur Dämpfung von Oberschwingungen im Zwischenkreis 6. Die an den Wechselrichtern anliegende Spannung (Zwischenkreisspannung) wird mit U_{d} bezeichnet.

Die Vierquadrantensteller 5 sind mit als GTOs realisierten elektrischen Ventilen versehen, welche durch Zündsignale gesteuert werden. Die Schaltzeitpunkte der GTOs werden dabei üblicherweise nach dem Pulsweitenmodulationsverfahren (PWM) durch die Schnittpunkte eines Trägersignals 9 mit einer den Spannungssollwert festlegenden Steuerspannung Uₛₜ bestimmt. Das Trägersignal 9 kann beispielsweise als Dreieck- oder Sägezahnspannung vorliegen und ist auf die Netzspannungsgrundschwingung 10 synchronisiert. Eine Phasenverschiebung des Trägersignals 9 gegenüber der Netzspannungsgrundschwingung 10 bewirkt aufgrund der relativen Verschiebung der Signale zueinander eine Verschiebung der Schaltzeitpunkte der GTOs.

Die Vierquadrantensteller 5 einer Antriebseinheit 1 takten phasenversetzt zueinander, um die Oberschwingungen zu reduzieren. Der Versatz ϕ des Phasenwinkels gegenüber der Netzspannungsgrundschwingung 10 setzt sich dabei für jeden Vierquadrantsteller 5 aus einem ersten zeitlich konstanten Anteil ϕ₁ und aus einem zweiten zeitlich veränderbaren Anteil ϕ₂ zusammen. Zuerst wird für die Ermittlung des zeitlich konstanten Anteils _{ϕ1} der Taktzeitpunkt jedes Vierquadrantenstellers 5 derart bestimmt, dass die Gesamtheit aller miteinander in Wirkverbindung stehenden Vierquadrantensteller 5 gleichmässig über eine Periode getaktet werden kann. Setzt sich eine Antriebseinheit 1 beispielsweise aus drei Vierquadrantenstellern 5 zusammen, so beträgt der Phasenwinkel zwischen den einzelnen Vierquadrantenstellern 120°, d.h. der erste Vierquadrantensteller ist um den Winkel ϕ₁₁=0°, der zweite um ϕ₁₂=120° und der dritte Vierquadrantensteller um ϕ₁₃=240° gegenüber der Netzspannungsgrundschwingung 10 verschoben. Entsprechend beträgt bei nur zwei Vierquadrantenstellern 5 die Verschiebung des Pha-Phasenwinkels ϕ₁₁=0° bzw. ϕ₁₂=180°. Relativ zueinander weisen alle Vierquadrantensteller 5 eines Zugverbundes somit immer die gleiche Verschiebung auf.

Anschliessend wird der zweite zeitlich veränderbare Anteil des Versatzes ϕ₂ bestimmt. Das erfindungsgemässe Verfahren sieht dazu vor, abhängig von einem Momentanwert einer Kenngrösse, wie beispielsweise dem Primärstrom Iₚᵣᵢₘ oder auch der Netzleistung Uₚᵣᵢₘ* Iₚᵣᵢₘ einer ausgewählten Antriebseinheit 1, welche auch als Master-Antriebseinheit bezeichnet werden kann, den zeitlich variablen Versatz ϕ₂ des Phasenwinkels des Trägersignals 9 gegenüber der Netzspannungsgrundschwingung 10 zu bestimmen. Erfindungsgemäss ist vorgesehen, dass die Master-Antriebseinheit derjenigen Lokomotive zugeordnet ist, welche eine Zugsammelschiene speist. Der Wert des zeitlich variablen Versatzes ϕ₂ des Phasenwinkels wird an alle Vierquadrantensteller 5 im Zugverbund übermittelt und zu dem zeitlich konstanten Versatz ϕ₁ jedes Vierquadrantenstellers 5 addiert. Es ergibt sich demgemäss durch den zeitlich veränderbaren Anteil des Versatzes ϕ₂ eine Verschiebung des Taktzeitpunkts aller beteiligten Stromrichter im Zugverbund gegenüber der Netzspannungsgrundschwingung 10, während die Taktzeitpunkte der Stromrichter relativ zueinander unverändert bleiben.

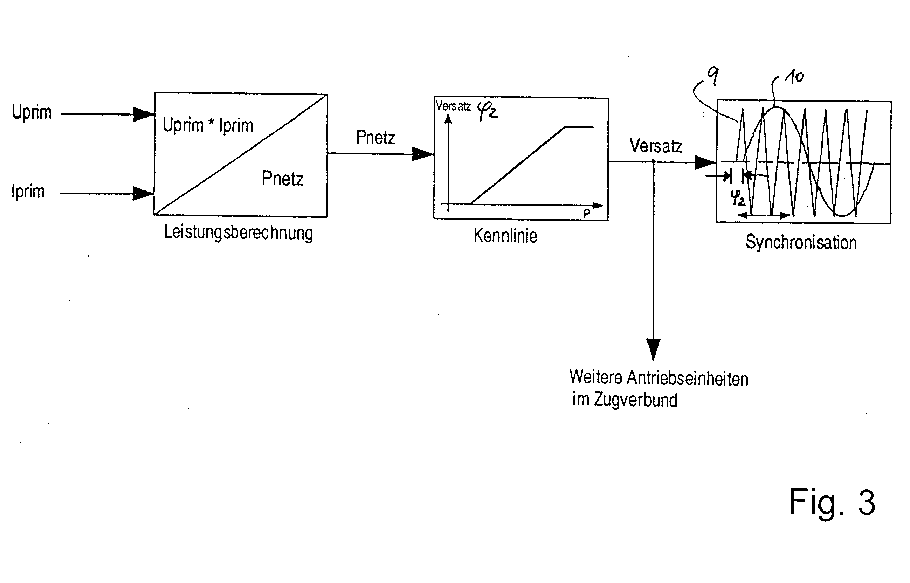

Die Bestimmung des Versatzes ϕ kann gemäss der vorliegenden Erfindung durch verschiedene Algorithmen erfolgen. Denkbar ist ein einfacher linearer Zusammenhang zwischen Versatz ϕ₂ und dem Momentanwert der Kenngrösse, wie er in Fig. 3 veranschaulicht wird. Es können jedoch auch Linear- oder trigonometrische Funktionen, wie z.B. Tangens, Cotangens, sowie Exponentialfunktionen oder dgl. eingesetzt werden. Vorzugsweise wird der Versatz ϕ in regelmässigen, genügend klein gewählten Abständen, wie beispielsweise im ms-Bereich, bestimmt.

Da es statistisch gesehen sehr unwahrscheinlich ist, dass zwei Triebfahrzeuge im Netz die gleiche Leistung aufweisen, kann die Anzahl der Fahrzeuge mit gleichem Versatz ϕ zuverlässig verkleinert werden. Netzrückwirkungen lassen sich auf diese Weise deutlich verringern.

Neben den bereits beschriebenen Kenngrössen sind weiterhin beliebige andere Grössen zur Steuerung des Phasenwinkelversatzes ϕ₂ denkbar, wie z.B. die Steuerspannung Uₛₜ des Vierquadrantenstellers 5 oder auch externe Grössen, wie Funksignale oder netzseitige Überspannungen.

### BEZEICHNUNGSLISTE

- 1: Antriebseinheit
- 2: Transformator
- 3: Primärwicklung
- 4: Traktionswicklung
- 5: Vierquadrantensteller
- 6: Gleichspannungszwischenkreis
- 7: Antriebswechselrichter
- 8: Asynchronmotor
- 9: Trägersignal
- 10: Netzspannungsgrundschwingung
- 11: Zugsammeschienenwicklung
- Ls: Saugkreisdrossel
- Cs: Saugkreiskondensator
- C_{Z}: Zwischenkreiskondensator
- U_{d}: Zwischenkreisspannung
- Uₙ: Netzspannung
- Uₚᵣᵢₘ: primärseitige Spannung
- Uₛₜ: Steuerspannung
- U_{zs}: Zugsammelschienenspannung
- Iₚᵣᵢₘ: primärseitiger Strom
- ϕ: Versatz
- ϕ₁: zeitlich konstanter Versatz
- ϕ₂: zeitlich veränderbarer Versatz

## Patentansprüche

1. Verfahren zur Steuerung von miteinander in Wirkbeziehung stehenden Stromrichtern, insbesondere von Vierquadrantenstellern,mehrerer Antriebseinheiten, wobei die Stromrichter steuerbare Ventile aufweisen und jeweils mittels eines auf eine Netzspannung synchronisierten Trägersignals und einer Steuerspannung getaktet werden,wobei der Phasenwinkel des Trägersignals (9) des jeweiligen Stromrichters zu dem Phasenwinkel einer Netzspannungsgrundschwingung (10) um einen Winkel ϕ verschoben ist und sich dieser Versatz (ϕ) des Phasenwinkels des Trägersignals des jeweiligen Stromrichters aus wenigstens einem ersten Anteil (ϕ1) und einem zweiten Anteil (ϕ₂) zusammensetzt, wobei der erste Anteil (ϕ₁) zeitlich konstant und der zweite Anteil (ϕ₂) abhängig von zeitlich veränderbaren Momentanwerten einer ausgewählten Kenngrösse bestimmt wird und daher zeitlich variabel ist, **dadurch gekennzeichnet, dass** als ausgewählte Kenngrösse die Netzleistung einer ausgewählten Antriebseinheit gewählt wird.

2. Verfahren nach Anspruch 1, **dadurch gekennzeichnet, dass** der zweite Anteil (ϕ₂) gemäss einem ausgewählten Algorithmus bestimmt wird.

3. Verfahren nach Anspruch 2, **dadurch gekennzeichnet, dass** der Zusammenhang zwischen der ausgewählten Kenngrösse und dem zweiten Anteil (ϕ₂) durch eine lineare Gleichung bestimmt werden kann.

4. Verfahren nach Anspruch 2, **dadurch gekennzeichnet, dass** der Zusammenhang zwischen der ausgewählten Kenngrösse und dem zweiten Anteil (ϕ₂) durch eine trigonometrische Gleichung bestimmt werden kann.

5. Verfahren nach einem der Ansprüche 1 bis 4, **dadurch gekennzeichnet, dass** sich mit steigender Netzleistung der zweite Anteil (ϕ₂) vergrössert.

6. Verfahren nach einem der Ansprüche 1 bis 5, **dadurch gekennzeichnet, dass** der zweite Anteil (ϕ₂) proportional zu der momentanen Netzleistung ist.

7. Verfahren nach einem der Ansprüche 1 bis 6, **dadurch gekennzeichnet, dass** der erste Anteil (ϕ₁) eine Funktion der Anzahl der Stromrichter ist, derart, dass die miteinander in Wirkverbindung stehenden Stromrichter phasenversetzt getaktet werden, so dass der Phasenwinkel (ϕ₁) zwischen jeweils zwei nacheinander getakteten Stromrichtern im wesentlichen konstant ist.

8. Verfahren nach Anspruch 7, **dadurch gekennzeichnet, dass** der Phasenwinkel (ϕ₁) zwischen jeweils zwei nacheinander getakteten Stromrichtern maximal ist.

9. Verfahren nach einem der Ansprüche 1 bis 8, **dadurch gekennzeichnet, dass** der zweite, zeitveränderliche Anteil (ϕ₂) abhängig von den zeitlich veränderlichen Momentanwerten der ausgewählten Kenngrösse bestimmt wird.

10. Verfahren nach einem der Ansprüche 1 bis 9, **dadurch gekennzeichnet, dass** die Antriebseinheiten einen Zugverbund angehören und die ausgewählte Antriebseinheit eine Zugsammelschiene des Zugverbundes speist.

## Claims

1. A method for controlling rectifiers in interaction with one another, particularly four-quadrant converters, of several drive units, with the rectifiers having controllable valves and are respectively cycled by a carrier signal synchronised to the mains voltage and a control voltage, with the phase angle of the carrier signal (9) of the respective rectifier to the phase angle of a mains voltage fundamental wave (10) being displaced by an angle ϕ and this displacement (ϕ) of the phase angle of the carrier signal of the respective rectifier being composed of at least a first portion (ϕ1) and a second portion (ϕ2), with the first portion (ϕ1) being constant in time and the second portion (ϕ2) being determined as a function of instantaneous values modifiable in time of a selected parameter and is therefore variable in time, **characterised in that** the mains output of a selected drive unit is chosen as the parameter.

2. Method according to claim 1, **characterised in that** the second portion (ϕ2) is determined according to a selected algorithm.

3. Method according to claim 2, **characterised in that** the relationship between the selected parameter and the second portion (ϕ2) can be determined by a linear equation.

4. Method according to claim 2, **characterised in that** the relationship between the selected parameter and the second portion (ϕ2) can be determined by a trigonometric equation.

5. Method according to one of claims 1 to 4, **characterised in that** the second portion (ϕ2) increases in size with increasing mains output.

6. Method according to one of claims 1 to 5, **characterised in that** the second portion (ϕ2) is proportional to the instantaneous mains output.

7. Method according to one of claims 1 to 6, **characterised in that** the first portion (ϕ1) is a function of the number of rectifiers in such a way that the rectifiers working in conjunction with one another are cycled with phase displacement, so that the phase angle (ϕ₁) between two rectifiers respectively cycled after each other is essentially constant.

8. Method according to claim 7, **characterised in that** the phase angle (ϕ1) between two rectifiers respectively cycled after one another is maximum.

9. Method according to one of claims 1 to 8, **characterised in that** the second portion (ϕ2) which is modifiable in time is determined as a function of the instantaneous values modifiable in time of the selected parameter.

10. Method according to one of claims 1 to 9, **characterised in that** the drive units belong to a train combination and the selected drive unit supplies a bus bar of the train combination.

## Revendications

1. Procédé permettant de commander des redresseurs en relation active les uns avec les autres, en particulier des actionneurs à quatre quadrants, plusieurs unités d'entraînement, moyennant quoi les redresseurs présentent des soupapes pouvant être commandées et sont cadencés respectivement à l'aide d'un signal porteur synchronisé sur une tension de réseau et d'une tension de commande, moyennant quoi l'angle de phase du signal porteur (9) du redresseur respectif est décalé d'un angle ϕ par rapport à l'angle de phase d'une oscillation fondamentale de tension de réseau (10), et ce décalage (ϕ) de l'angle de phase du signal porteur du redresseur respectif est constitué d'au moins une première section (ϕ₁) et d'une deuxième section (ϕ₂), moyennant quoi la première section (ϕ₁) est constante dans le temps et la deuxième section (ϕ₂) est déterminée en fonction de valeurs instantanées variables dans le temps d'une grandeur caractéristique choisie et elle est donc variable dans le temps, **caractérisé en ce que**, comme grandeur caractéristique choisie, on utilise la puissance réseau d'une unité d'entraînement choisie.

2. Procédé selon la revendication 1, **caractérisé en ce que** la deuxième section (ϕ₂) est déterminée en fonction d'un algorithme choisi.

3. Procédé selon la revendication 2, **caractérisé en ce que** la relation entre la grandeur caractéristique choisie et la deuxième section (ϕ₂) peut être déterminée par une équation linéaire.

4. Procédé selon la revendication 2, **caractérisé en ce que** la relation entre la grandeur caractéristique choisie et la deuxième section (ϕ2) peut être déterminée par une équation trigonométrique.

5. Procédé selon l'une quelconque des revendications 1 à 4, **caractérisé en ce que**, au fur et à mesure que la puissance du réseau augmente, la deuxième section (ϕ₂) s'amplifie.

6. Procédé selon l'une quelconque des revendications 1 à 5, **caractérisé en ce que** la deuxième section (ϕ2) est proportionnelle à la puissance instantanée du réseau.

7. Procédé selon l'une quelconque des revendications 1 à 6, **caractérisé en ce que** la première section (ϕ₁) est fonction du nombre de redresseurs, de telle sorte que les redresseurs en relation active les uns avec les autres sont cadencés avec un décalage de phase, de telle manière que l'angle de phase (ϕ₁) est sensiblement constant entre respectivement deux redresseurs cadencés l'un après l'autre.

8. Procédé selon la revendication 7, **caractérisé en ce que** l'angle de phase (ϕ₁) est maximal entre respectivement deux redresseurs cadencés l'un après l'autre.

9. Procédé selon l'une quelconque des revendications 1 à 8, **caractérisé en ce que** la deuxième section (ϕ2) variable dans le temps est déterminée en fonction des valeurs instantanées variables dans le temps de la grandeur caractéristique choisie.

10. Procédé selon l'une quelconque des revendications 1 à 9, **caractérisé en ce que** les unités d'entraînement appartiennent à une liaison ferroviaire et l'unité d'entraînement choisie est une barre omnibus de train de la liaison ferroviaire.
